# EUROPÄISCHE PATENTSCHRIFT

(11) **EP 3 591 245 B1**
(45) Veröffentlichungstag und Bekanntmachung des Hinweises auf die Patenterteilung: **13.09.2023**
(21) Anmeldenummer: 19182591.8
(22) Anmeldetag: 26.06.2019
(51) Int. Cl.: F16C 33/78

(54) **ABGEDICHTETES LAGERMODUL**
SEALED BEARING MODULE
MODULE DE PALIER ÉTENCHÉIFIÉ

(30) Priorität: 04.07.2018 DE 102018211020
(43) Veröffentlichungstag der Anmeldung: 08.01.2020
(73) Patentinhaber: Aktiebolaget SKF, 415 50 Göteborg (SE)
(72) Erfinder: Baumann, Michael, 97503 Gädheim (DE); Hofmann, Matthias, 97422 Schweinfurt (DE)
(74) Vertreter: Kuhstrebe, Jochen

(56) Entgegenhaltungen:
- EP-A1- 2 993 123
- DE-A1- 2 756 080
- DE-A1-102009 014 923
- DE-A1-102010 063 687
- DE-A1-102014 205 816
- JP-A- 2011 220 465

## Beschreibung

Vorliegende Erfindung betrifft ein abgedichtetes Lagermodul einer Gezeitenanlage mit einem Rotor mit an einer Rotornabe angeordneten Rotorblättern und einer den Rotor tragenden Gondel zum Übertragen eines Antriebsmoments von der Rotornabe zu einem Getriebe oder Generator in der Gondel gemäß dem Oberbegriff von Anspruch 1.

Ein gattungsgemäßes abgedichtetes Lagermodul wird in EP 2993 123 offenbart. Ein Dichtungssystem in einer Gezeitenanlage zeigt JP 2011 220 465.

In Gezeitenanlagen muss die drehende Rotornabe mit darauf folgender Rotorwelle gelagert werden. Bisherige Lageranordnungen werden als Einzelteile geliefert und vor Ort in die Gezeitenanlage eingebaut und zusammengesetzt. Die Anforderungen an solche Lageranordnungen in Bezug auf Zuverlässigkeit, Lebensdauer oder reduzierte Wartungsintensivität sind hoch, da solche Gezeitenanlagen selbst eine lange Lebensdauer haben. Um diese Anforderungen zu erfüllen, ist es wünschenswert, so wenig Bauteile wie möglich zu verwenden, um so einen möglichen Ausfall der Bauteile zu reduzieren.

Es ist deshalb Aufgabe vorliegender Erfindung, eine Lageranordnung bereitzustellen, durch die die Anzahl der benötigten Bauteile in einer Gezeitenanlage reduziert werden kann.

Diese Aufgabe wird durch ein abgedichtetes Lagermodul gemäß Anspruch 1 gelöst.

Das abgedichtete Lagermodul kann in einer Gezeitenanlage verwendet werden, die einen Rotor mit an einer Rotornabe angeordneten Rotorblättern und eine den Rotor tragenden Rotorwelle aufweist. Der Rotor ist dabei an einer Gondel befestigt. Insbesondere kann ein solches Lagermodul verwendet werden, um ein Antriebsmoment von der Rotornabe zu einem Getriebe oder Generator in der Gondel zu übertragen. Die Gondel weist ein Gehäuse auf, wobei in dem Gehäuse der Generator und die Generatorwelle angeordnet sind. Die Rotornabe kann, beispielsweise über eine Rotorwelle, direkt mit einer Eingangswelle des Getriebes verbunden sein oder stellt diese dar. Eine Ausgangswelle des Getriebes ist wiederum mit dem Generator bzw. der Generatorwelle verbunden. Alternativ kann die Rotomabe direkt mit dem Generator ohne dazwischen geschaltetes Getriebe verbunden sein.

Um das Antriebsmoment von der Rotornabe zu dem Getriebe oder Generator zu übertragen, weist das Lagermodul einen Innenring und einen Außenring auf, wobei einer dieser Lagerringe als geteilter Lagerring ausgestaltet ist.

Um die Anzahl der benötigten Bauteile zu reduzieren, weist das vorgeschlagene Lagermodul nur ein Lager auf. Des Weiteren wird das Lagermodul als Gesamtsystem bereitgestellt und kann in bereits zusammengesetztem Zustand in der Gezeitenanlage montiert werden. Somit wird die Montage wesentlich vereinfacht.

Einer der Lagerringe des Lagermoduls weist sich axial erstreckende Bohrungen zum Befestigen des Lagerrings direkt an dem Gondelgehäuse auf. Die Bohrungen können umfänglich um den Ring verteilt sein. Bevorzugt sind die Bohrungen gleichmäßig verteilt. Der andere Lagerring ist mit der Rotorwelle und/oder der Rotornabe verbunden. Durch die Anordnung der beiden Lagerringe kann ein sehr kompaktes Lagermodul bereitgestellt werden, wodurch die Länge der Generatorwelle reduziert werden kann. Dies führt auch zu einer kompakteren Bauweise mit geringeren Gewicht der Gondel, in der die Rotorwelle angeordnet ist, und dadurch auch zu geringeren Kosten.

Derjenige Lagerring, der als geteilter Lagerring ausgebildet ist, ist mittels eines Vorspannelements vorgespannt. Durch die Verwendung des Vorspannelements kann der geteilte Lagerring zusammengehalten werden.

Das Lagermodul kann dabei von der Rotorseite aus als Ganzes in die Gezeitenanlage eingesetzt und in dieser montiert werden. Auf diese Weise wird eine Plug-and-Play-Lösung bereitgestellt, die einfach in die Gezeitenanlage integriert werden kann. Dies reduziert mögliche Fehler beim Einbau. Des Weiteren können nötige Tests, wie beispielsweise auf Dichtheit, bereits bei der Herstellung erfolgen.

Das Lager kann ein Rollenlager, insbesondere ein Kegelrollenlager, sein. Vorzugsweise handelt es sich bei dem Kegelrollenlager um ein zweireihiges Kegelrollenlager. Die Rollen des Lagers können durch einen Käfig voneinander getrennt sein. Ist das Kegelrollenlager in einer O-Anordnung ausgebildet, handelt es sich bei dem geteilten Lagerring um den Innenring. Ist das Kegelrollenlager stattdessen in einer X-Anordnung ausgebildet, wird der Außenring als geteilter Lagerring ausgebildet.

Das erste und das zweite Lagerringteil des geteilten Lagerrings können eine Durchgangsbohrung aufweisen, durch die das Vorspannelement, insbesondere eine Gewindestange, durchführbar ist, um die Lagerringteile gegeneinander vorzuspannen. Die Gewindestange kann an beiden Enden ein Abschlusselement aufweisen, um eine stufenlose Vorspannung über das Anzugsmoment der Muttern zu ermöglichen. Bei dem Abschlusselement kann es sich beispielweise um eine Mutter oder einen Kopf eines Bolzens handeln. Die Gewindestange kann sich mit einem Ende, bzw. Abschlusselement, an dem ersten Lagerringteil und mit dem anderen an dem zweiten Lagerringteil abstützen. In diesem Fall kann die Rotomabe direkt mit dem ersten Lagerringteil und die Getriebeeingangswelle oder Generatorwelle direkt mit dem zweiten Lagerringteil verbunden sein. Die Übertragung des Antriebsmoments erfolgt dabei über den geteilten Lagerring. Auf eine separate Rotorwelle kann hierbei verzichtet werden.

Alternativ kann zwischen der Rotornabe und dem ersten Lagerringteil ein Zwischenelement angeordnet sein, an dem sich die Gewindestange abstützt. In diesem Fall erfolgt die Übertragung des Antriebsmoments von der Rotornabe über das Zwischenelement und den geteilten Lagerring auf die Getriebe- oder Generatorwelle.

In einer alternativen Ausführungsform kann das Vorspannelement ein Klemmring sein, wobei der Klemmring ein Kraftbeaufschlagungselement aufweist, um Kraft auf den zweiten Lagerringteil auszuüben. Dabei kann die Rotorwelle ein Abstützelement aufweisen, an dem sich das erste Lagerringteil abstützt. Das Abstützelement kann integral mit der Rotorwelle ausgebildet sein, beispielsweise in Form einer Auskragung. Das Kraftbeaufschlagungselement kann beispielsweise als ein Absatz des Klemmrings ausgebildet sein, der an dem zweiten Lagerringteil anliegt und eine Kraft parallel zu der Längsachse der Rotorwelle oder der Generatorwelle auf das zweite Lagerringteil ausübt.

Um die Position des Klemmrings festzulegen, kann sich der Klemmring des Weiteren an der Rotorwelle abstützen. Insbesondere kann der Klemmring eine Bohrung aufweisen, um den Klemmring mit der Rotorwelle zu verbinden.

Das Lagermodul weist des Weiteren ein Dichtungssystem zum Abdichten des Lagermoduls auf. Das Dichtungssystem dient dazu, das Lager zum einen gegen Seewasser abzudichten und zum anderen Schmiermittel in dem Lager zu halten. Das Dichtungssystem kann daher vorzugsweise zwischen dem Außenring/Innenring und dem Rotor angeordnet sein, da von der Seite des Rotors Seewasser eindringen kann.

Um einen einfachen Austausch des Dichtungssystems zu ermöglichen, ist dieses direkt an dem Außenring und Innenring bzw. der Rotorwelle abnehmbar angeordnet. Auf diese Weise kann auch nach der Montage des Lagermoduls in der Gezeitenanlage das Dichtungssystem bei Bedarf abgenommen und ausgetauscht werden. Bevorzugt ist das Dichtungssystem dabei auf einer Seite des Außenrings hin zu dem Rotor angeordnet.

Das Dichtungssystem weist eine Anlauffläche auf. Diese kann integral mit der Rotorwelle oder an einem Distanzring, der auf der Rotorwelle angeordnet ist, ausgebildet sein. Alternativ kann die Anlauffläche integral mit dem oben beschriebenen Zwischenelement oder an einem Distanzring, der auf dem Zwischenelement angeordnet ist, ausgebildet sein.

Die Anlauffläche kann aus Edelstahl, insbesondere Chromstahl, hergestellt sein. Um das Lagermodul abzudichten, kann zwischen dem Distanzring und der Rotorwelle oder dem Zwischenelement eine Abdichtung vorgesehen sein. Diese Abdichtung kann beispielsweise durch O-Ringe realisiert werden, die zwischen der Rotorwelle/dem Zwischenelement und dem Distanzring angeordnet sind.

Erfindungsgemäß weist das Dichtungssystem eine Mehrzahl von Dichteinheiten auf. Jede Dichteinheit besteht dabei aus einem Dichtungsträgerring und einem Dichtelement mit einer Dichtlippe. Die Dichtelemente sind an der Anlauffläche angeordnet, wobei die jeweilige Dichtlippe dichtend an der Anlauffläche schleift, und werden jeweils von einem Dichtungsträgerring getragen. Die einzelnen Dichtungsträgerringe sind in axialer Richtung zu der Anlauffläche nebeneinander angeordnet. Dabei können immer zwei Dichtungsträgerringe mit Befestigungsmitteln, beispielsweise mit einer Schraubverbindung, aneinander befestigt werden. Die Befestigungsmittel können dabei in axialer Ausrichtung umlaufend zueinander versetzt sein.

Die Dichtlippen können aus einem Gummi- oder Polyurethanmaterial hergestellt sein. Bevorzugt weist das verwendete Material eine Eigenschmierung auf und ist für eine Anwendung in Seewasser geeignet. Bei Dichtlippen aus einem Polyurethanmaterial (Plastik) erfolgt die Eigenschmierung durch Festschmierstoffe (Kohlenstoff), die im Kunststoff im Herstellprozess eingebettet sind.

Die Dichtungsträgerringe können aus Edelstahl, Baustahl oder Gusseisen bestehen. Zusätzlich kann die Oberfläche der Dichtungsträgerringe mit einer Korrosionsschutzschicht geschützt werden. Die Korrosionsschutzschicht kann beispielsweise Zink aufweisen und als Lack oder als feuerverzinkte Schicht aufgebracht werden. Bei der Verwendung von nicht selbst korrosionsgeschützten Stählen kann eine Opferanode verwendet werden, um Korrosion zu vermeiden oder zumindest zu verzögern.

Das Dichtungssystem kann zu dem Außenring hin eine Dichteinheit aufweisen, die direkt an dem Außenring angeordnet ist. Im Vergleich zu den übrigen Dichteinheiten kann diese Dichteinheit in radialer Richtung größer ausgestaltet sein und in ihren Ausmaßen dem Au-ßenring entsprechen.

Zu der axial gegenüberliegenden Seite des Dichtungssystems weist das Dichtungssystem gemäß einer Ausführungsform eine Dichteinheit auf, die als Dichtungsabdeckung wirkt. Die Dichtungsabdeckung schließt das Dichtungssystem gegenüber dem Rotor ab. Die übrigen Dichteinheiten sind zwischen der Dichtungsabdeckung und der Dichteinheit am Au-ßenring angeordnet.

Durch diese Anordnung, bei der die Dichteinheiten axial nebeneinander angeordnet sind, können auf einfache Weise die Dichteinheiten ausgetauscht werden. Hierzu muss lediglich die Dichtungsabdeckung abgenommen werden und anschließend kann die erste Dichteinheit ausgetauscht werden. Ist mehr als eine Dichteinheit auszutauschen, können die erste Dichteinheit und weitere, auf die erste Dichteinheit folgende Dichteinheiten ausgetauscht werden.

Erfindungsgemäß weisen die Dichtungsträgerringe bzw. die Dichtlippen unterschiedliche Breiten auf. Dadurch können bei einem Austausch von mehreren Dichteinheiten diese in anderer Reihenfolge wieder eingebaut werden, so dass sich die Dichtungsträgerringe bzw. Dichtlippen nach dem Wiedereinbau an unterschiedlichen Laufspuren befinden als zuvor. Auf diese Weise kann die Abnutzung der Anlauffläche gleichmäßiger verteilt werden. Eine Abnutzung der Anlauffläche kann aufgrund des Drucks der Dichtlippen gegen die Anlauffläche auftreten. Abhängig von dem Wasserdruck und zu erwartenden Wartungsintervallen, sind mehrere Dichteinheiten vorgesehen. Die äußeren Dichteinheiten dienen zum Abdichten des Lagers gegenüber eintretendem Seewasser. Zunächst dichtet dabei die äußerste Dichteinheit, d.h. die Dichtungsabdeckung, ab. Wenn die äußerste Dichteinheit, bzw. deren Dichtlippe abgenutzt ist, d.h. wenn sie kein Seewasser mehr abhalten kann, dienen die folgenden Dichtlippen als Abdichtung gegenüber eintretendem Seewasser. Auf diese Weise wird ein Dichtungssystem verwendet, welches zusätzlich zu einer Dichtlippe noch weitere Backup-Dichtlippen aufweist. Zusätzlich können Dichteinheiten bzw. Dichtlippen an den Lagerringen angeordnet sein, um ein Schmiermittel in dem Lager zu halten.

Gemäß einem weiteren Aspekt wird eine Gezeitenanlage mit einem Rotor mit an einer Rotornabe angeordneten Rotorblättern und einer den Rotor tragenden Rotorwelle vorgeschlagen, wobei ein Antriebsmoment von der Rotornabe zu dem Getriebe oder Generator durch ein wie oben beschriebenes abgedichtetes Lagermodul übertragbar ist.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine Schnittansicht eines abgedichteten Lagermoduls für eine Gezeitenanlage gemäß einer ersten Ausführungsform;
- Fig. 2:: eine Schnittansicht eines abgedichteten Lagermoduls für eine Gezeitenanlage gemäß einer zweiten Ausführungsform;
- Fig. 3:: eine Schnittansicht eines abgedichteten Lagermoduls für eine Gezeitenanlage gemäß einer dritten Ausführungsform.

Im Folgenden werden gleiche oder funktionell gleichwirkende Elemente mit denselben Bezugszeichen gekennzeichnet.

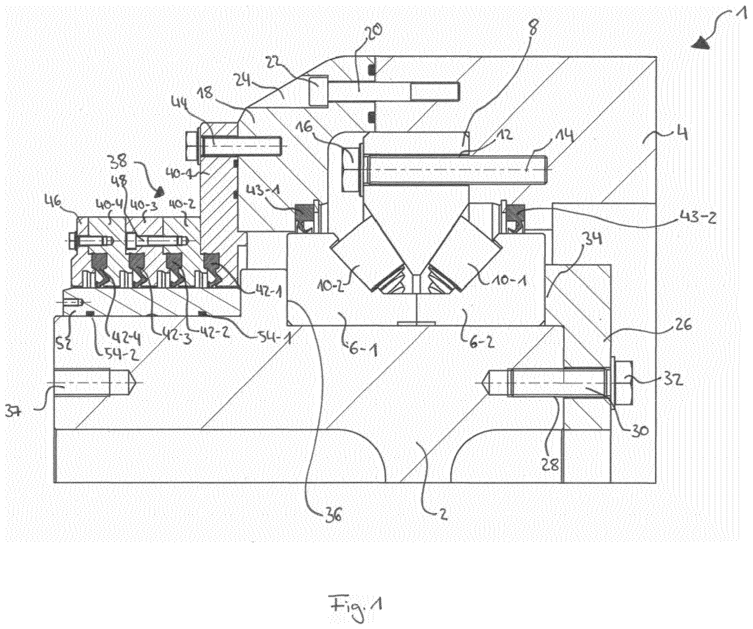

Fig. 1 zeigt ein abgedichtetes Lagermodul 1. Das Lagermodul 1 dient dazu, ein Antriebsmoment von einer Rotornabe (nicht gezeigt) eines Rotors einer Gezeitenanlage zu einem Getriebe oder Generator (nicht gezeigt) in einer Gondel der Gezeitenanlage zu übertragen. Die Übertragung des Antriebsmoments erfolgt dabei in den gezeigten Figuren von links (Rotorseite) nach rechts (Generatorseite) über eine Rotorwelle 2, die eine Drehung der Rotornabe auf das darauf folgende Getriebe oder den Generator überträgt. Das Lagermodul 1 kann dabei insbesondere in einem Gehäuse 4 der Gondel untergebracht sein. Das Gehäuse 4 schützt dabei das Lager und gibt mechanische Steifigkeit gegen Lagerverformung.

Das Lagermodul 1 weist einen Innenring 6 und einen Außenring 8 auf, zwischen denen Wälzkörper 10 angeordnet sind. In der gezeigten Ausführungsform handelt es sich um ein zweireihiges Kegelrollenlager in O-Anordnung, bei dem der Innenring als geteilter Ring mit einem ersten Ringteil 6-1 und einem zweiten Ringteil 6-2 ausgestaltet ist. Als nicht gezeigte alternative Ausführungsform kann das zweireihige Kegelrollenlager auch als X-Anordnung mit einem geteilten Außenring ausgebildet sein.

Der Außenring 8 weist eine Durchgangsbohrung 12 auf, in die ein Befestigungsmittel einführbar ist, um den Außenring 8 mit dem Gehäuse 4 zu verbinden. In der in Fig. 1 gezeigten Ausführungsform ist in der Durchgangsbohrung 12 eine Gewindestange 14 als Befestigungsmittel vorgesehen, die mit einem Ende in das Gehäuse 4 eingeschraubt ist. An dem entgegengesetzten Ende ist eine Mutter 16 aufgeschraubt, über die sich das Befestigungsmittel an dem Außenring 8 abstützt. Selbstverständlich kann der Außenring 8 auch über Bolzen, die in das Gehäuse 4 eingeschraubt werden, mit dem Gehäuse 4 verbunden werden.

Um das Gehäuse 4 im Bereich des Außenrings 8 abzuschließen, ist eine Abdeckung 18 vorgesehen, die mit dem Gehäuse 4 über ein Befestigungsmittel verbunden ist und die den Außenring 8 abdeckt. Das Befestigungsmittel kann, wie in Fig. 1 gezeigt, ein Bolzen 20 sein, der von der Abdeckung 18 aus in das Gehäuse 4 eingeschraubt ist. An der Abdeckung 18 stützt sich das Befestigungsmittel mittels einer Mutter oder eines Bolzenkopfs 22 ab, der in einer Vertiefung 24 der Abdeckung 18 versenkt sein kann.

Um den geteilten Innenring 6 zu sichern und vorzuspannen, ist ein Vorspannelement vorgesehen. In der in Fig. 1 gezeigten Ausführungsform ist das Vorspannelement als Klemmring 26 ausgestaltet. Dieser weist eine Durchgangsbohrung 28 auf, um den Klemmring 26 an der Welle 2 zu befestigen. In die Durchgangsbohrung 28 des Klemmrings 26 ist ein Bolzen 30 eingeführt, der mit einem Ende in die Rotorwelle 2 eingeschraubt ist. Das andere Ende des Bolzens 30 ist über eine Mutter oder einen Bolzenkopf 32 an dem Klemmring 26 abgestützt.

Um den Innenring 6 vorzuspannen, weist der Klemmring 26 ein Kraftbeaufschlagungselement 34 auf, das in einer Richtung des Innenrings 6 über den Klemmring 26 auskragt und somit in einer Richtung parallel zu der Längsachse der Welle 2 Kraft auf den zweiten Lagerringteil 6-2 ausüben kann. Das erste Lagerringteil 6-1 stützt sich dagegen an einem Abstützelement 36 ab. Dieses Abstützelement 36 kann als Auskragung der Welle 2 ausgebildet sein und kann allgemein als Wellenschulter bezeichnet werden.

Die Rotorwelle 2 ist über einen Bolzen 37 mit der Rotornabe verbunden. Auf diese Weise kann das Antriebsmoment von der Rotornabe direkt auf die Rotorwelle 2 und damit auf das folgende Getriebe oder Generator übertragen werden.

Um das Lagermodul 1 abzudichten, weist das Lagermodul 1 ein Dichtungssystem 38 auf. Das Dichtungssystem 38 weist eine Mehrzahl von Dichteinheiten auf. Jede der Dichteinheiten weist einen Dichtungsträgerring 40 und eine in diesem angeordnete Dichtlippe 42 auf. Eine der Dichteinheiten ist mit ihrem Dichtungsträgerring 40-1 direkt mit der Abdeckung 18 des Gehäuses 4 verbunden. Hierzu wird von der Seite der Dichteinheit ein Befestigungsmittel 44, beispielsweise eine Schraube, durch den Dichtungsträgerring 40-1 in die Abdeckung 18 eingeschraubt. Diese Dichteinheit dient somit der Befestigung des Dichtungssystems 38 an dem Gehäuse 4. Auf diese Weise kann das Dichtungssystem 38 bei Bedarf einfach von dem Gehäuse 4 demontiert und ausgetauscht werden.

Zur Abdichtung nach außen dient eine Dichtungsabdeckung 46. Zwischen dieser Dichtungsabdeckung 46 und der Dichteinheit mit dem Dichtungsträgerring 40-1 sind mehrere Dichteinheiten mit ihren Dichtungsträgerringen 40-2, 40-3, 40-4 usw. angeordnet. Jeder dieser Dichtungsträgerringe 40 weist ein Dichtelement 42 mit einer Dichtlippe auf. Die Dichtungsträgerringe 40 sind über Befestigungsmittel 48 miteinander verbunden. Dabei sind immer zwei Dichtungsträgerringe 40 miteinander verbunden. Die Befestigungsmittel 48 sind dabei in axialer Richtung umlaufend zueinander versetzt.

Im Betrieb laufen die Dichtlippen der Dichtelemente 42 gegen eine Anlauffläche 50 an. Die Anlauffläche 50 kann integral mit der Welle 2 ausgebildet sein oder, wie in Fig. 1 dargestellt, an einem Distanzring 52, der auf der Welle 2 angeordnet ist, ausgebildet sein. Um das Lagermodul 1 abzudichten, kann zwischen dem Distanzring 52 und der Welle 2 eine Abdichtung vorgesehen sein. Diese Abdichtung kann beispielsweise durch O-Ringe 54 realisiert werden.

Ist eine der Dichtlippen abgenutzt, kann das zugehörige Dichtelement 42 auf einfache Weise ausgetauscht werden. Hierzu wird zunächst die Dichtungsabdeckung 46 abgenommen. Danach kann die anschließende Dichteinheit mit ihrem Dichtungsträgerring 40 und dem Dichtelement 42 entfernt und als Einheit ausgetauscht werden.

Die Dichtelemente 42dienen als Reihenschaltung dazu, Seewasser aus dem Lager abzuhalten. Das Dichtelement 42-4 muss dabei den höchsten Druck aushalten und wird daher zuerst abgenutzt. Hält das Dichtelement 42-4 dem Druck des Seewassers nicht mehr stand, übernimmt das folgende Dichtelement 42-3 diese Funktion. Das Dichtelement 42-4 fungiert dabei weiterhin als Filter für größere Verunreinigungen. In dem Dichtungssystem 38 kann ein Sensor (nicht gezeigt), beispielsweise ein Feuchtigkeitssensor oder Drucksensor angeordnet sein, der ein Signal ausgeben kann, wenn Seewasser die Dichtelemente 42-3, 42-2 oder 42-1 erreicht. Sobald ein solches Signal ausgegeben wird, kann ein Austausch der Dichtelemente 42 initiiert werden. Zusätzlich können Dichtelemente 43-1, 43-2 an den Lagerringen 4, 6 vorgesehen sein, die dazu dienen, Schmiermittel in dem Lager zu halten.

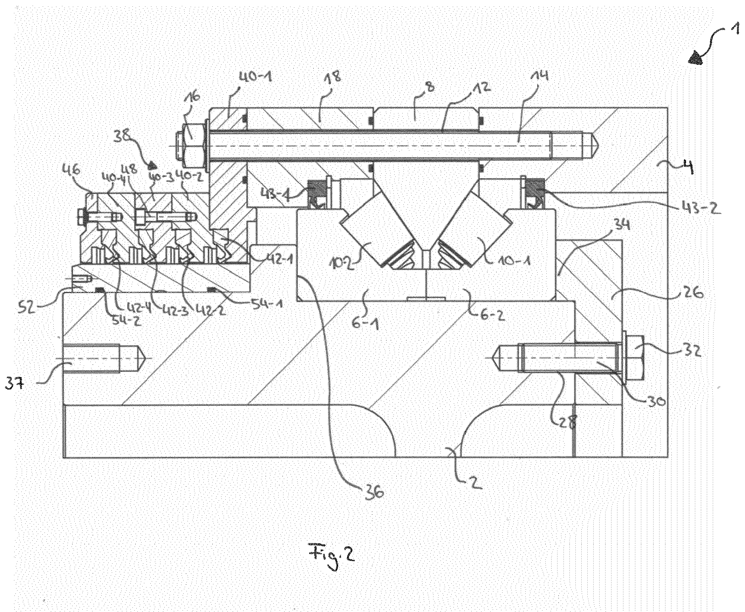

Fig. 2 zeigt ein Lagermodul 1 gemäß einer zweiten Ausführungsform, wobei sich die Ausführungsformen der Figuren 1 und 2 lediglich in der Befestigung des Außenrings 8 an dem Gehäuse 4 unterscheiden.

Der Außenring 8 weist wie in Fig. 1 eine Durchgangsbohrung 12 auf, in die ein Befestigungsmittel einführbar ist, um den Außenring 8 mit dem Gehäuse 4 zu verbinden. Im Gegensatz zu der in Fig. 1 gezeigten Ausführungsform, ist in Fig. 2 eine Gewindestange oder ein Bolzen 14 als Befestigungsmittel vorgesehen, die durch die Durchgangsbohrung durchführt und mit einem Ende in das Gehäuse 4 eingeschraubt ist und mit dem entgegengesetzten Ende durch die Abdeckung 18 durchführt und sich mittels der Mutter oder dem Bolzenkopf 16 an dem Dichtungsträgerring 40-1 abstützt.

Es kann somit auf ein zweites Befestigungsmittel, wie es in Fig. 1 durch den Bolzen 20 und die Mutter oder den Bolzenkopf 22 realisiert ist, verzichtet werden. Gegebenenfalls kann auch auf das Befestigungsmittel 44 aus Fig. 1 verzichtet werden.

Insbesondere kann das Lagermodul 1, wie es in Fig. 2 gezeigt ist, als Gesamtmodul an dem Gehäuse 4 montiert werden. Die Einzelteile, insbesondere das Dichtungssystem 38 bzw. der Dichtungsträgerring 40-1, die Abdeckung 18 und der Außenring 8 können vorab bereits zusammengeschraubt sein und eine Baueinheit darstellen, die vorgespannt und abgedichtet ist. Diese Baueinheit stellt somit ein Lagermodul 1 dar, welches fertig zum Einbau in einer Gezeitenanlage ist.

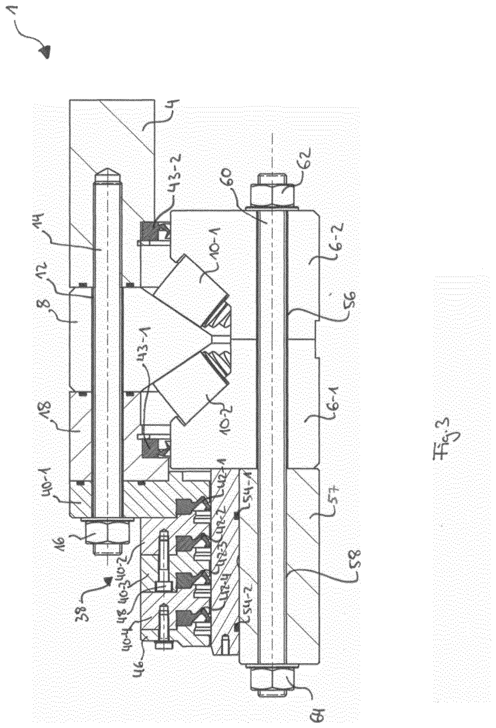

Fig. 3 zeigt ein Lagermodul 1 gemäß einer dritten Ausführungsform, wobei sich die Ausführungsformen der Figuren 2 und 3 durch die Art des Vorspannelements des Innenrings 6 und die Anordnung des Innenrings 6 unterscheiden.

Der Innenring 6 weist in dieser Ausführungsform eine Durchgangsbohrung 56 auf. Statt die Rotornabe über eine Rotorwelle 2 mit dem Generator zu verbinden, ist hier ein optionales Zwischenelement 57 vorgesehen, das eine Durchgangsbohrung 58 aufweist. Die Durchgangsbohrung 58 des Zwischenelements 57 ist auf die Durchgangsbohrung 56 des Innenrings 6 ausgerichtet. Das Vorspannelement zum Vorspannen der Ringteile 6-1 und 6-2 des Innenrings 6 wird hier durch eine Gewindestange oder einen Bolzen 60 realisiert, die durch die Durchgangsbohrungen 56, 58 führt.

Die Gewindestange 60 wird an einem Ende durch eine Mutter 62 an dem zweiten Ringteil 6-2 abgestützt. Durch die Mutter 62 wird das Kraftbeaufschlagungselement 34 der Figuren 1 und 2 realisiert. An dem entgegengesetzten Ende wird die Gewindestange 60 durch eine Mutter 64 an dem Zwischenelement 57 abgestützt. Durch die beiden Muttern 62, 64, von denen eine als Kopf eines Bolzens ausgebildet sein kann, wird die Gewindestange 60 somit verspannt. Der Innenring 6 stützt sich dabei an einer Anschlagsfläche des Zwischenelements 57 ab, die das Abstützelement 36 bildet.

In dieser Ausführungsform kann somit auf die Verwendung eines Klemmrings 26, wie er in den Figuren 1 und 2 vorgesehen ist, verzichtet werden. Des Weiteren erfolgt die Übertragung des Antriebsmoments von der Rotornabe auf den Generator über das Zwischenelement 57 und den Innenring 6. Auf eine separate Rotorwelle 2 kann somit verzichtet werden. Das Verbindungselement 60 kann auch verlängert werden und somit die Rotornabe mit dem folgenden Getriebe oder Generator komplett verbunden werden.

Zusammenfassend wird durch das vorgeschlagene abgedichtete Lagermodul eine kompakte Lagerbaugruppe bereitgestellt. Durch diese kann insbesondere die Länge der Rotorwelle und damit die Größe bzw. das Gewicht der Gondel reduziert werden, um Kosten zu sparen. Des Weiteren kann das Lagermodul bereits vor dem Einbau an seinem Bestimmungsort erforderliche Tests, wie beispielsweise auf Dichtheit, durchlaufen, wodurch die Montage bzw. der Wartungsaufwand nach der Montage vereinfacht wird.

### Bezugszeichenliste

- 1: Lagermodul
- 2: Rotorwelle
- 4: Gehäuse
- 6: Innenring
- 8: Außenring
- 10: Wälzkörper
- 12: Durchgangsbohrung
- 14: Bolzen
- 16: Mutter
- 18: Abdeckung
- 20: Bolzen
- 22: Mutter
- 24: Vertiefung
- 26: Klemmring
- 28: Durchgangsbohrung
- 30: Bolzen
- 32: Mutter
- 34: Kraftbeaufschlagungselement
- 36: Abstützelement
- 37: Bolzen
- 38: Dichtungssystem
- 40: Dichtungsträgerring
- 42: Dichtelement
- 43: Dichtelement
- 44: Befestigungsmittel
- 46: Dichtungsabdeckung
- 48: Befestigungsmittel
- 50: Anlauffläche
- 52: Distanzring
- 54: O-Ring
- 56: Durchgangsbohrung
- 57: Zwischenelement
- 58: Durchgangsbohrung
- 60: Bolzen
- 62: Mutter
- 64: Mutter

## Patentansprüche

1. Abgedichtetes Lagermodul (1) für eine Gezeitenanlage mit einem Rotor mit an einer Rotornabe angeordneten Rotorblättern und einer den Rotor tragenden Rotorwelle zum Übertragen eines Antriebsmoments von der Rotornabe zu einem Getriebe oder Generator in einer Gondel, wobei die Gondel ein Gehäuse (4) aufweist und wobei das Lagermodul (1) zwei Lagerringe (6, 8) aufweist, wobei mindestens einer der Lagerringe (6, 8) ein geteilter Lagerring mit einem ersten Lagerringteil (6-1) und einem zweiten Lagerringteil (6-2) ist,
**dadurch gekennzeichnet,**
**dass** einer der Lagerringe (8) sich axial erstreckende Bohrungen (12) zum Befestigen des Lagerrings (8) direkt an dem Gondelgehäuse (4) aufweist, dass der andere Lagerring (6) mit einer Rotorwelle (2) und/oder oder mit der Rotornabe verbindbar ist und dass der geteilte Lagerring (6) mittels eines Vorspannelements (26, 60) vorgespannt ist,
wobei das Lagermodul (1) des Weiteren ein Dichtungssystem (38) zum Abdichten des Lagermoduls (1) aufweist, wobei das Dichtungssystem (38) eine Anlauffläche (50) und eine Mehrzahl von Dichteinheiten aufweist, wobei jede Dichteinheit ein Dichtelement (42) mit einer Dichtlippe aufweist, das an der Anlauffläche (50) angeordnet ist und das jeweils von einem Dichtungsträgerring (40) getragen ist,
**dadurch gekennzeichnet, dass**
die Dichtungsträgerringe und/oder die Dichtlippen unterschiedliche Breiten aufweisen.

2. Abgedichtetes Lagermodul nach Anspruch 1, wobei das Lagermodul (1) ein Kegelrollenlager, insbesondere ein zweireihiges Kegelrollenlager, ist.

3. Abgedichtetes Lagermodul nach Anspruch 2, wobei das Kegelrollenlager in einer O-Anordnung ausgebildet ist und der geteilte Lagerring der Innenring (6) ist oder wobei das Kegelrollenlager in einer X-Anordnung ausgebildet ist und wobei der geteilte Lagerring der Außenring (8) ist.

4. Abgedichtetes Lagermodul nach einem der vorhergehenden Ansprüche, wobei das erste und das zweite Lagerringteil (6-1, 6-2) eine Durchgangsbohrung (56) aufweisen, durch die das Vorspannelement (60), insbesondere eine Gewindestange, durchführbar ist, um die Lagerringteile (6-1, 6-2) gegeneinander vorzuspannen.

5. Abgedichtetes Lagermodul nach Anspruch 4, wobei ein Zwischenelement (57) zwischen der Rotornabe und dem geteilten Lagerring (6) vorgesehen ist, wobei sich das Vorspannelement (60) mit einem Ende an dem Zwischenelement (57) abstützt und mit dem anderen Ende an dem zweiten Lagerringteil (6-2) abstützt.

6. Abgedichtetes Lagermodul nach einem der Ansprüche 1 bis 3, wobei das Vorspannelement ein Klemmring (26) ist, wobei der Klemmring (26) ein Kraftbeaufschlagungselement (34) aufweist, um Kraft auf den zweiten Lagerringteil (6-2) auszuüben, und wobei die Rotorwelle (2) ein Abstützelement (36) aufweist, an dem das erste Lagerringteil (6-1) abstützbar ist.

7. Abgedichtetes Lagermodul nach Anspruch 6, wobei der Klemmring (26) eine Bohrung (28) aufweist, um den Klemmring (26) mit der Rotorwelle (2) zu verbinden.

8. Gezeitenanlage mit einem Rotor mit an einer Rotornabe angeordneten Rotorblättern und einer den Rotor tragenden Rotorwelle sowie einer Gondel mit einem Generator, wobei ein Antriebsmoment von der Rotornabe zu einem Getriebe oder dem Generator durch ein abgedichtetes Lagermodul (1) gemäß einem der vorhergehenden Ansprüche übertragbar ist.

## Claims

1. Sealed-off bearing module (1) for a tidal installation having a rotor, which has rotor blades arranged on a rotor hub, and having a rotor shaft, which bears the rotor and serves for transmitting a drive moment from the rotor hub to a transmission or generator in a nacelle, wherein the nacelle has a housing (4), and wherein the bearing module (1) has two bearing rings (6, 8), wherein at least one of the bearing rings (6, 8) is a split bearing ring having a first bearing-ring part (6-1) and a second bearing-ring part (6-2),
**characterized**
**in that** one of the bearing rings (8) has axially extending bores (12) for fastening of the bearing ring (8) directly to the nacelle housing (4), in that the other bearing ring (6) is connectable to a rotor shaft (2) and/or to the rotor hub, and in that the split bearing ring (6) is preloaded by means of a preloading element (26, 60), wherein the bearing module (1) furthermore has a seal system (38) for sealing off the bearing module (1), wherein the seal system (38) has a run-on surface (50) and a plurality of sealing units, wherein each sealing unit has a sealing element (42) with a sealing lip, which sealing element is arranged on the run-on surface (50) and is in each case carried by a seal-carrier ring (40),
**characterized in that**
the seal-carrier rings and/or the sealing lips have different widths.

2. Sealed-off bearing module according to Claim 1, wherein the bearing module (1) is a tapered-roller bearing, in particular a two-row tapered-roller bearing.

3. Sealed-off bearing module according to Claim 2, wherein the tapered-roller bearing is designed so as to be in an O-arrangement and the split bearing ring is the inner ring (6), or wherein the tapered-roller bearing is designed so as to be in an X-arrangement and the split bearing ring is the outer ring (8).

4. Sealed-off bearing module according to one of the preceding claims, wherein the first and second bearing-ring parts (6-1, 6-2) have a passage bore (56) through which the preloading element (60), in particular a threaded rod, is able to be guided in order to preload the bearing-ring parts (6-1, 6-2) against one another.

5. Sealed-off bearing module according to Claim 4, wherein an intermediate element (57) is provided between the rotor hub and the split bearing ring (6), wherein the preloading element (60) is supported by way of one end against the intermediate element (57) and by way of the other end against the second bearing-ring part (6-2).

6. Sealed-off bearing module according to one of Claims 1 to 3, wherein the preloading element is a clamping ring (26), wherein the clamping ring (26) has a force-application element (34) in order for force to be exerted on the second bearing-ring part (6-2), and wherein the rotor shaft (2) has a support element (36) against which the first bearing-ring part (6-1) is able to be supported.

7. Sealed-off bearing module according to Claim 6, wherein the clamping ring (26) has a bore (28) for connection of the clamping ring (26) to the rotor shaft (2).

8. Tidal installation having a rotor, which has rotor blades arranged on a rotor hub, and having a rotor shaft, which bears the rotor, and also having a nacelle, which has a generator, wherein a drive moment is able to be transmitted from the rotor hub to a transmission or to the generator by way of a sealed-off bearing module (1) according to one of the preceding claims.

## Revendications

1. Module de palier étanchéifié (1) pour une installation marémotrice avec un rotor avec des pales de rotor agencées sur un moyeu de rotor et un arbre de rotor portant le rotor pour transmettre un couple d'entraînement du moyeu de rotor à une transmission ou à un générateur dans une nacelle, la nacelle présentant un carter (4) et le module de palier (1) présentant deux bagues de palier (6, 8), au moins l'une des bagues de palier (6, 8) étant une bague de palier divisée avec une première partie de bague de palier (6-1) et une deuxième partie de bague de palier (6-2),
**caractérisé en ce que**
l'une des bagues de palier (8) présente des alésages (12) s'étendant axialement pour fixer la bague de palier (8) directement sur le carter de nacelle (4), **en ce que** l'autre bague de palier (6) peut être reliée à un arbre de rotor (2) et/ou au moyeu de rotor, et **en ce que** la bague de palier divisée (6) est précontrainte au moyen d'un élément de précontrainte (26, 60),
le module de palier (1) présentant en outre un système d'étanchéité (38) pour étanchéifier le module de palier (1), le système d'étanchéité (38) présentant une surface de contact (50) et une pluralité d'unités d'étanchéité, chaque unité d'étanchéité présentant un élément d'étanchéité (42) avec une lèvre d'étanchéité qui est agencée sur la surface de contact (50) et qui est portée respectivement par une bague de support de joint d'étanchéité (40),
**caractérisé en ce que**
les bagues de support de joint d'étanchéité et/ou les lèvres d'étanchéité présentent des largeurs différentes.

2. Module de palier étanchéifié selon la revendication 1, dans lequel le module de palier (1) est un roulement à rouleaux coniques, notamment un roulement à rouleaux coniques à deux rangées.

3. Module de palier étanchéifié selon la revendication 2, dans lequel le roulement à rouleaux coniques est configuré selon un agencement en a et la bague de palier divisée est la bague intérieure (6) ou dans lequel le roulement à rouleaux coniques est configuré selon un agencement en X et dans lequel la bague de palier divisée est la bague extérieure (8).

4. Module de palier étanchéifié selon l'une quelconque des revendications précédentes, dans lequel la première et la deuxième partie de bague de palier (6-1, 6-2) présentent un alésage traversant (56) à travers lequel l'élément de précontrainte (60), notamment une tige filetée, peut être passé pour précontraindre les parties de bague de palier (6-1, 6-2) l'une contre l'autre.

5. Module de palier étanchéifié selon la revendication 4, dans lequel un élément intermédiaire (57) est prévu entre le moyeu du rotor et la bague de palier divisée (6), l'élément de précontrainte (60) s'appuyant par une extrémité sur l'élément intermédiaire (57) et par l'autre extrémité sur la deuxième partie de bague de palier (6-2) .

6. Module de palier étanchéifié selon l'une quelconque des revendications 1 à 3, dans lequel l'élément de précontrainte est une bague de serrage (26), dans lequel la bague de serrage (26) présente un élément d'application de force (34) pour exercer une force sur la deuxième partie de bague de palier (6-2), et dans lequel l'arbre de rotor (2) présente un élément d'appui (36) sur lequel la première partie de bague de palier (6-1) peut s'appuyer.

7. Module de palier étanchéifié selon la revendication 6, dans lequel la bague de serrage (26) présente un alésage (28) pour relier la bague de serrage (26) à l'arbre de rotor (2) .

8. Installation marémotrice avec un rotor avec des pales de rotor agencées sur un moyeu de rotor et un arbre de rotor portant le rotor, ainsi qu'une nacelle avec un générateur, dans laquelle un couple d'entraînement peut être transmis du moyeu de rotor à une transmission ou au générateur par un module de palier étanchéifié (1) selon l'une quelconque des revendications précédentes.
